# EUROPÄISCHE PATENTSCHRIFT

(11) **EP 4 254 743 B1**
(45) Veröffentlichungstag und Bekanntmachung des Hinweises auf die Patenterteilung: **25.11.2026**
(21) Anmeldenummer: 23191538.0
(22) Anmeldetag: 16.06.2021
(51) Int. Cl.: F04B 39/12, F04B 39/06, F04B 39/14, F04B 35/04, F04C 29/00, H02K 5/00, H02K 1/18, H02K 7/14

(54) **KÄLTEMITTELVERDICHTER**
REFRIGERANT COMPRESSOR
COMPRESSEUR DE RÉFRIGÉRANT

(30) Priorität: 24.06.2020 DE 102020116691; 09.07.2020 DE 102020118191
(43) Veröffentlichungstag der Anmeldung: 04.10.2023
(62) Dokumentnummer(n) der früheren Anmeldung(en) nach Art. 76 EPÜ: 21179844.2 / 3 929 436
(73) Patentinhaber: BITZER Kühlmaschinenbau GmbH, 71065 Sindelfingen (DE)
(72) Erfinder: Friedrich, Axel, 04159 Leipzig (DE); Becker, Andreas, 06116 Halle (DE)
(74) Vertreter: Hoeger, Stellrecht & Partner Patentanwälte mbB

(56) Entgegenhaltungen:
- WO-A1-2019/020730
- WO-A1-2019/185121
- DE-A1- 10 003 882
- DE-A1- 102012 100 196
- DE-U1- 9 320 524
- US-A- 6 164 934
- US-A1- 2002 135 244

## Beschreibung

Die Erfindung betrifft einen Kältemittelverdichter, umfassend ein Gesamtgehäuse mit einem Motorgehäuseabschnitt, in welchem ein Motorraum mit einem in diesem vorgesehenen Elektromotor, umfassend einen Stator und einen Rotor, angeordnet ist und mit einem Verdichtergehäuseabschnitt, welcher eine Verdichtereinheit aufweist, wobei das Gesamtgehäuse einen ersten Decke und einen zweiten Deckel aufweist, zwischen denen sich eine Gehäusehülse erstreckt, die den Motorgehäuseabschnitt sowie den Verdichtergehäuseabschnitt aufweist, in welchem ein Zylindergehäuse vorgesehen ist, wobei das Zylindergehäuse einen Zylinderkopf trägt, und wobei die Gehäusehülse mit den Gehäusedeckeln aus Leichtmetall, insbesondere aus Aluminium, hergestellt ist, wobei das Gesamtgehäuse mit den Zylinderköpfen aus Aluminium ist.

Ein derartiger Kältemittelverdichter ist aus der WO 2019/185121 bekannt.

Der Nachteil dieser Lösung ist jedoch, dass diese bei hohen Drucken Probleme bereitet.

Der Erfindung liegt die Aufgabe zugrunde, Kältemittelverdichter mit einer einfach herzustellenden und einfach abzudichtenden Gehäusestruktur zu schaffen.

Die erfindungsgemäße Lösung sieht vor, dass der Zylinderkopf durch ein an das Zylindergehäuse angeformtes Zylinderkopfunterteil, das seinerseits noch die Zylinder aufnimmt, gebildet ist, dass das an die Gehäusehülse angeformte Zylinderkopfunterteil aus Leichtmetall, insbesondere aus Aluminium, hergestellt ist, dass das Zylinderkopfunterteil eine die Zylinder abschließende Ventilplatte trägt, auf welcher wiederum auf einer dem Zylinderkopfunterteil gegenüberliegenden Seite ein Zylinderkopfoberteil angeordnet ist, dass die Ventilplatte und das Zylinderkopfoberteil aus Stahl ausgebildet sind, und dass die Gehäusehülse eine näherungsweise zylindrische, insbesondere kreiszylindrische, Form aufweist.

Der Vorteil der erfindungsgemäßen Lösung ist darin zu sehen, dass dadurch eine besonders einfach herzustellende und einfach abzudichtende Gehäusestruktur geschaffen ist, die auch insbesondere dazu geeignet ist, hohen Innendrücken Stand zu halten.

Darüber hinaus ist zweckmäßigerweise vorgesehen, dass der Kältemittelverdichter für CO₂ als Kältemittel ausgelegt ist und somit kann ein zu erzeugender Hochdruck über 80 bar und ein zu erzeugender Mitteldruck über 40 bar liegen.

Eine vorteilhafte Lösung sieht dabei vor, dass mindestens ein Kontakteinsatz zur Durchführung elektrischer Zuleitungen in das Gesamtgehäuse in einem Deckel vorgesehen ist, so dass die Gehäusehülse selbst durch das Anbringen eines Kontakteinsatzes nicht geschwächt ist.

Besonders vorteilhaft ist es, wenn sämtliche in das Gesamtgehäuse geführten elektrischen Leitungen über mindestens einen Kontakteinsatz in mindestens einem der Deckel des Gesamtgehäuses geführt sind, so dass keinerlei Kontakteinsatz in die Gehäusehülse eingesetzt werden muss und somit die sich zwischen den Deckeln erstreckende Gehäusehülse frei von elektrischen Anschlüssen ausgebildet ist.

Dabei umfassen die in das Gesamtgehäuse geführten elektrischen Leitungen einerseits Stromzuleitungen zu dem Elektromotor und andererseits Leitungen zu verschiedensten, im Gesamtgehäuse angeordneten Sensoren zur Überwachung des Elektromotors und/oder der Funktion des Kältemittelverdichters.

Dadurch dass die erfindungsgemäße Gehäusehülse eine näherungsweise zylindrische, insbesondere kreiszylindrische, Form aufweist, hat diese den Vorteil, dass sie selbst bei einem Leichtmetall als Werkstoff eine hohe Stabilität aufweist.

Beispielsweise ist die Gehäusehülse vorzugsweise aus Leichtmetall, insbesondere Aluminium ausgebildet.

Darüber hinaus ist vorteilhafterweise vorgesehen, dass der Zylinderkopf ein am Zylindergehäuse angeordnetes Zylinderkopfunterteil aufweist, das seinerseits ein das Zylinderkopfunterteil abschließendes Zylinderkopfoberteil mit mindestens einer in diesem integrierten Auslasskammer trägt, und dass in das Gesamtgehäuse geführte Kältemittelanschlüsse entweder in dem Zylinderkopfoberteil oder in einem der Deckel angeordnet sind, so dass ebenfalls auch keinerlei Kältemittelanschlüsse in der Gehäusehülse vorgesehen werden müssen und somit diese eine optimale Stabilität aufweist.

Ferner ist der erfindungsgemäße Verdichter vorzugsweise ein zweistufiger Verdichter, wobei in dem Zylinderkopfoberteil eine Auslasskammer für Mitteldruck und eine Auslasskammer für Hochdruck vorgesehen ist.

Ferner ist vorzugsweise ein Kältemittelanschluss zur Zufuhr von Kältemittel, insbesondere von auf Mitteldruck verdichtetem Kältemittel in dem den Gehäuseabschnitt abschließenden Deckel angeordnet.

Bei den eingangs genannten Kältemittelverdichtern mit Verdichtereinheiten, die als Kolbenverdichter Spiralverdichter oder Schraubenverdichter ausgebildet sein können, besteht das Problem, den Stator einerseits möglichst einfach und andererseits so anzuordnen, dass selbst bei Formveränderungen des Motorgehäuseabschnitts ein möglichst geringer Spalt zwischen dem Stator und dem Rotor aufrechterhalten werden kann.

Diese Aufgabe wird alternativ oder ergänzend bei einem Kältemittelverdichter der eingangs beschriebenen Art erfindungsgemäß dadurch gelöst, dass der Stator in dem Motorgehäuseabschnitt mittels in den Motorgehäuseabschnitt eingesetzten Tragelementen gelagert ist, die einerseits an einer Statoraufnahmefläche des Motorgehäuseabschnitts anliegen und andererseits den in die Tragelemente eingesetzten Stator an seiner Außenseite, insbesondere über mindestens drei Viertel eines Umfangs derselben, umfassen und federelastisch relativ zur Statoraufnahmefläche abstützen.

Der Vorteil der Lösung ist darin zu sehen, dass durch die federelastische Abstützung des Stators relativ zur Statoraufnahmefläche sich Durchmesservariationen der Statoraufnahmefläche des Motorgehäuseabschnitts kompensieren lassen und gleichzeitig es ermöglichen, dass der Stator stets zentriert in dem Motorgehäuseabschnitt angeordnet ist, da die diesen umschließenden und federelastisch zur Statoraufnahmefläche abstützenden Tragelemente jeweils auf gegenüberliegenden Seiten des Stators zwischen diesem und dem Motorgehäuseabschnitt wirksam sind und somit den Stator relativ zum Motorgehäuseabschnitt sowohl bei thermisch bedingtem als auch bei druckbedingten Durchmesserveränderungen zentriert halten.

Dies hat dann den Vorteil, dass dadurch der Spalt zwischen dem Stator und dem Rotor möglichst gering gehalten werden kann und somit eine hohe Effizienz des Elektromotors realisierbar ist.

Die federelastisch wirksamen Tragelemente können unterschiedlichster Art und Weise ausgebildet sein. Beispielsweise können die Tragelemente dickenelastische Bänder sein.

Eine besonders vorteilhafte Lösung sieht vor, dass die Tragelemente federelastische Körper aufweisen, die so dimensioniert sind, dass sie in allen beim Betrieb des Kältemittelverdichters auftretenden Betriebszuständen des Motorgehäuseabschnitts im elastisch deformierten Zustand sind, das heißt, dass in keinem Betriebszustand die federelastischen Körper in den Bereich der plastischen Deformation kommen, was dazu führen würde, dass sich die elastischen Eigenschaften der federelastischen Körper verändern würden.

Insbesondere ist vorteilhafterweise vorgesehen, dass die Tragelemente um den Stator herum verlaufend angeordnet sind und den Stator jeweils auf gegenüberliegenden Seiten der Rotorachse mehrfach relativ zur Statoraufnahmefläche des Motorgehäuses abstützen, um dadurch eine gleichmäßige eine von allen Seiten auf den Stator einwirkende federelastische Positionierung desselben zu erreichen.

Ferner ist vorzugsweise vorgesehen, dass die Tragelemente in definierten Winkelabständen um die Rotorachse herum angeordnete elastische Körper aufweisen.

Beispielsweise ermöglicht diese Lösung auch eine Kühlung des Elektromotors dadurch, dass Kältemittel zwischen der Statoraufnahmefläche und der Außenseite des Stators und durch die Tragelemente hindurch parallel zur Rotorachse strömen kann.

Insbesondere sind dabei die elastischen Körper durch ein diese relativ zueinander positionierendes und um den Stator umlaufendes Bandmaterial relativ zueinander an der Statoraufnahmefläche positioniert.

Eine besonders einfache Ausführung der elastischen Körper sieht vor, dass diese in das Bandmaterial eingeformt sind.

Eine besonders günstige Lösung sieht vor, dass das Bandmaterial als ringähnliche Spange mit offenen Enden ausgebildet ist, so dass sie sich einfach zur Montage in dem Motorgehäuseabschnitt deformieren und somit insbesondere in ein aus Leichtmetall ausgebildeten Motorgehäuseabschnitt spanfrei einsetzen lässt.

Eine besonders einfache Realisierung der federelastischen Körper sieht vor, dass diese in einem spitzen Winkel zur Außenseite des Stators und/oder zur Statoraufnahmefläche zwischen Fußbereichen und Abstützbereichen, von denen die einen an der Außenseite des Stators und die anderen an der Statoraufnahmefläche anliegen, verlaufende Flankenbereiche aufweisen.

Derartige schräg zur Außenseite des Stators und/oder zur Statoraufnahmefläche verlaufende Flankenbereiche ermöglichen eine federelastische Bewegung der Abstützbereiche relativ zu den Fußbereichen, ohne dass sich dadurch die Fußbereiche oder Abstützbereiche in einer Umlaufrichtung um den Stator bewegen, da die federelastische Bewegung primär in den Flankenbereichen erfolgt.

Eine besonders vorteilhafte Lösung sieht vor, dass die federelastischen Körper aufeinanderfolgend in ein federelastisches Bandmaterial eingeformt sind, so dass aufeinanderfolgende Abstützbereiche an einer Außenseite des Stators oder an der Statoraufnahme anliegen und aufeinanderfolgende Fußbereiche an der Statoraufnahmefläche oder der Außenseite des Stators anliegen, das heißt, dass die Abstützbereiche und die Fußbereiche in einer Umlaufrichtung um den Stator aufeinanderfolgend angeordnet sind und somit im Wesentlichen um den gesamten Stator herum die federelastische Abstützung desselben relativ zur Statoraufnahmefläche erfolgt.

Ferner hat es sich als vorteilhaft erwiesen, wenn die federelastischen Körper zwischen um den Stator umlaufend angeordneten Randbereichen liegen und die Abstützbereiche über in einem spitzen Winkel zur Außenseite des Stators und/oder zur Statoraufnahmefläche verlaufende Flankenbereiche mit den Randbereichen verbunden sind.

Diese Lösung weist durch diese Flankenbereiche insbesondere ergänzend zu den die Abstützbereiche mit den Fußbereichen verbindendenden Flankenbereichen eine vorteilhafte elastische Abstützung der Abstützbereiche relativ zu den Randbereichen und außerdem erlauben derartige Flankenbereiche durch ihre Wirkung als Einschubschräge ein Einschieben des Stators in die bereits auf der Statoraufnahmefläche anliegenden Tragelemente, wobei das Einschieben des Stators dabei parallel zur Rotorachse des Elektromotors erfolgt.

Vorzugsweise liegen bei dieser Lösung einerseits die Abstützbereiche an der Außenseite des Stators oder der Statoraufnahmefläche und andererseits die die Randbereiche an der Statoraufnahmefläche oder der Außenseite des Stators an.

Insbesondere ermöglichen die gemäß einem oder mehreren der vorstehend beschriebenen Merkmale ausgebildeten Tragelemente eine Entkopplung von Stator und Gehäusehülse, wobei sich einerseits die Tragelemente spanfrei in der Gehäusehülse montieren lassen und dann andererseits wiederum der Stator spanfrei, insbesondere über die als Einschubschrägen ausgebildeten Flankenbereiche, durch Einschieben montieren und durch Herausziehen demontieren lässt, wobei der Stator beim Einschieben die federelastischen Elemente deformiert.

Insbesondere dann, wenn die vorstehend beschriebenen Tragelemente keine ringförmig geschlossenen Elemente sind, sondern den Stator zwar umfassen, jedoch umfangseitig im Abstand voneinander positionierbare Enden aufweisen, sind die Tragelemente durch entsprechende elastische Deformation zur Reduzierung der Außenkontur einfach und ohne Beschädigung der Gehäusehülse einsetzbar.

Dies wirkt sich insbesondere vorteilhaft aus, wenn die Gehäusehülse aus Leichtmetall, vorzugsweise Aluminium ausgebildet ist.

Hinsichtlich der Ausbildung der Tragelemente selbst wurden im Zusammenhang mit der bisherigen Erläuterung der erfindungsgemäßen Lösung keine näheren Angaben gemacht.

So sieht eine vorteilhafte Lösung vor, dass die Tragelemente aus einem federelastischen Material, insbesondere Federstahl, gebildet sind.

Insbesondere bei Ausbildung der Tragelemente aus federelastischem Material lässt sich der Stator spanfrei in die Tragelemente einschieben oder herausziehen.

Darüber hinaus wurden bislang keine Angaben gemacht, wie die Tragelemente in dem Motorgehäuseabschnitt positioniert sind.

So sieht eine vorteilhafte Lösung zum Erreichen einer definierten Relativposition der Tragelemente vor, dass in Richtung der Rotorachse aufeinanderfolgend angeordnete Tragelemente durch ein Distanzelement im Abstand voneinander in dem Motorgehäuseabschnitt positioniert sind.

Vorzugsweise liegt dabei das Distanzelement in gleicher Weise wie die Tragelemente an der Statoraufnahmefläche des Motorgehäuseabschnitts an und hält die Tragelemente in der durch die Länge des Distanzelements in Richtung der Rotorachse vorgegebenen Abstand.

Insbesondere liegt dabei das Distanzelement ebenfalls den Stator umfassend an der Statoraufnahmefläche an.

Um mindestens eines der Tragelemente hinsichtlich seiner Position im Motorgehäuseabschnitt definiert relativ zur Statoraufnahmefläche ausrichten zu können, ist vorzugsweise vorgesehen, dass mindestens eines der Tragelemente hinsichtlich seiner Position in dem Motorgehäuseabschnitt durch eine sich an die Statoraufnahmefläche anschließende Stufe positioniert ist, und zwar dadurch, dass das Tragelement zumindest mit einer Seite an der Stufe anliegend positioniert ist.

Die vorstehende Beschreibung erfindungsgemäßer Lösungen umfasst somit insbesondere die durch die nachfolgenden aufeinanderfolgenden Ausführungsformen definierten verschiedenen Merkmalskombinationen:
Eine erste Ausführungsform eines Kältemittelverdichters (10) umfasst ein Gesamtgehäuse (12) mit einem Motorgehäuseabschnitt (22), in welchem ein Motorraum (98) mit einem in diesem vorgesehenen Elektromotor (102), umfassend einen Stator (172) und einem Rotor (174), angeordnet ist, und einem Verdichtergehäuseabschnitt (24), welcher eine Verdichtereinheit aufweist, wobei das Gesamtgehäuse (12) einen ersten Deckel (14) und einen zweiten Deckel (18) aufweist, zwischen denen sich eine Gehäusehülse (16) erstreckt, die den Motorgehäuseabschnitt (22) sowie den Verdichtergehäuseabschnitt (24) aufweist, in welchem die Verdichtereinheit (26) vorgesehen ist.

Kältemittelverdichter (10) nach der ersten Ausführungsform, wobei der Kältemittelverdichter für CO₂ als Kältemittel ausgelegt ist. Kältemittelverdichter (10) nach der ersten oder zweiten Ausführungsform, wobei mindestens ein Kontakteinsatz (252, 262) zur Durchführung elektrischer Zuleitungen in das Gesamtgehäuse (12) in einem der Deckel (14, 18) vorgesehen ist.

Kältemittelverdichter (10) nach der dritten Ausführungsform, wobei sämtliche in das Gesamtgehäuse (12) geführten elektrischen Leitungen über mindestens einen Kontakteinsatz (252, 262) in mindestens einem der Deckel (14, 18) des Gesamtgehäuses (12) geführt sind.

Kältemittelverdichter (10) nach der vierten Ausführungsform, wobei die in das Gesamtgehäuse (12) geführten elektrischen Leitungen einerseits Stromzuleitungen zu dem Elektromotor (102) und andererseits Leitungen zu verschiedensten, im Gesamtgehäuse (12) angeordneten Sensoren (272, 274, 276) zur Überwachung des Elektromotors (102) und/oder der Funktion des Kältemittelverdichters (10) sind.

Kältemittelverdichter (10) nach einer der voranstehenden Ausführungsformen, wobei die Gehäusehülse (16) eine näherungsweise zylindrische, insbesondere kreiszylindrische, Form aufweist.

Kältemittelverdichter (10) nach der sechsten Ausführungsform, wobei die Gehäusehülse (16) vorzugsweise aus Leichtmetall, insbesondere Aluminium, ist.

Kältemittelverdichter (10) nach der siebten Ausführungsform, wobei die Gehäusehülse (16) mit den Gehäusedeckeln (14, 18) aus Leichtmetall, insbesondere aus Aluminium, hergestellt sind und in gleicher Weise auch das an die Gehäusehülse (16) angeformte Zylinderkopfunterteil (62).

Kältemittelverdichter (10) nach einer der voranstehenden Ausführungsformen, wobei der Verdichtergehäuseabschnitt (24) ein Zylindergehäuse (52) mit einem Zylinderkopf (54) aufweist.

Kältemittelverdichter (10) nach der neunten Ausführungsform, wobei der Zylinderkopf (56) ein am Zylindergehäuse (52) angeordnetes Zylinderkopfunterteil (62) aufweist, das seinerseits ein das Zylinderkopfunterteil (62) abschließendes Zylinderkopfoberteil (66) mit mindestens einer in diesem integrierten Auslasskammer (82) trägt, und dass in das Gesamtgehäuse (12) geführte Kältemittelanschlüsse (94, 96, 106) entweder in dem Zylinderkopfoberteil (66) oder in einem der Deckel (14, 18) angeordnet sind.

Kältemittelverdichter (10) nach einer der voranstehenden Ausführungsformen, wobei dieser ein zweistufiger Verdichter ist und dass in dem Zylinderkopfoberteil (66) eine Auslasskammer (78) für Mitteldruck und eine Auslasskammer (78) für Hochdruck vorgesehen ist.

Kältemittelverdichter (10) nach einer der voranstehenden Ausführungsformen, wobei der Stator (172) in dem Motorgehäuseabschnitt (98) mittels in den Motorgehäuseabschnitt (98) eingesetzten Tragelementen (192, 194) gelagert ist, die einerseits an einer Statoraufnahmefläche (184) des Motorgehäuseabschnitts (22) anliegen und andererseits den in die Tragelemente (192, 194) eingesetzten Stator (172) an seiner Außenseite (182) umfassen und federelastisch relativ zur Statoraufnahmefläche (184) abstützen.

Kältemittelverdichter (10) nach der zwölften Ausführungsform, wobei die Tragelemente (192, 194) federelastische Körper (202) aufweisen, die so dimensioniert sind, dass sie in allen beim Betrieb des Kältemittelverdichters (10) auftretenden Betriebszuständen des Motorgehäuseabschnitts (184) in elastisch deformiertem Zustand sind.

Kältemittelverdichter (10) nach der zwölften oder dreizehnten Ausführungsform, wobei die Tragelemente (192, 194) um den Stator (172) herum verlaufend angeordnet sind und den Stator (172) jeweils auf gegenüberliegenden Seiten der Rotorachse (178) mehrfach relativ zur Statoraufnahmefläche (184) des Motorgehäuseabschnitts (22) abstützen.

Kältemittelverdichter (10) nach einer der zwölften bis vierzehnten Ausführungsformen, wobei die Tragelemente (192, 194) in definierten Winkelabständen um die Rotorachse (178) herum angeordnete elastische Körper (202) aufweisen.

Kältemittelverdichter (10) nach einer der voranstehenden Ausführungsformen, wobei die elastischen Körper (202) durch ein diese relativ zueinander positionierendes und um den Stator (172) umlaufendes Bandmaterial (208) relativ zueinander positioniert sind, dass insbesondere die elastischen Körper (202) in das Bandmaterial (208) eingeformt sind, dass insbesondere das Bandmaterial (208) als ringähnliche Spange mit offenen Enden (210) ausgebildet ist.

Kältemittelverdichter (10) nach einer der voranstehenden Ausführungsformen, wobei die federelastischen Körper (202) in einem spitzen Winkel zur Außenseite (182) des Stators (172) und/oder zur Statoraufnahmefläche (184) zwischen Fußbereichen (228) und Abstützbereichen (222), von denen die einen an der Außenseite (182) des Stators (172) und die anderen an der Statoraufnahmefläche (184) anliegen, verlaufende Flankenbereiche (224, 226, 234, 236) aufweisen.

Kältemittelverdichter (10) nach einer der voranstehenden Ausführungsformen, wobei die federelastischen Körper (202) aufeinanderfolgend in ein federelastisches Bandmaterial (208) eingeformt sind, so dass aufeinanderfolgende Abstützbereiche (222) an einer Außenseite (182) des Stators (172) oder an der Statoraufnahmefläche (184) anliegen und aufeinanderfolgende Fußbereiche (228) an der Statoraufnahmefläche (184) oder der Außenseite (182) des Stators (172) anliegen.

Kältemittelverdichter (10) nach einer der voranstehenden Ausführungsformen, wobei die federelastischen Körper (202) zwischen um den Stator (172) umlaufend angeordneten Randbereichen (212, 214) liegen und die Abstützbereiche (222) über in einem spitzen Winkel zur Außenseite (182) des Stators (172) und/oder zur Statoraufnahmefläche (184) verlaufende Flankenbereiche (234, 236) mit den Randbereichen (212, 214) verbunden sind, dass insbesondere einerseits die Abstützbereiche (222) an der Außenseite (182) des Stators (172) oder der Statoraufnahmefläche (184) und andererseits die Randbereiche (212, 214) an der Statoraufnahmefläche (184) oder der Außenseite (182) des Stators (172) anliegen.

Kältemittelverdichter (10) nach einer der voranstehenden Ausführungsformen, wobei die Tragelemente (192, 194) aus einem federelastischen Material, insbesondere Federstahl, gebildet sind.

Kältemittelverdichter (10) nach einer der voranstehenden Ausführungsformen, wobei in Richtung der Rotorachse (178) aufeinanderfolgend angeordnete Tragelemente (192, 194) durch ein Distanzelement (244) im Abstand voneinander in dem Motorgehäuseabschnitt (22) positioniert sind.

Kältemittelverdichter (10) nach einer der voranstehenden Ausführungsformen, wobei eines der Tragelemente (192) hinsichtlich seiner Position in dem Motorgehäuseabschnitt (22) durch eine sich an die Statoraufnahmefläche (184) anschließende Stufe (146) positioniert ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontansicht eines ersten Ausführungsbeispiels eines erfindungsgemäßen Kältemittelverdichters;
- Fig. 2: eine perspektivische Gesamtansicht eines ersten Ausführungsbeispiels des erfindungsgemäßen Kältemittelverdichters;
- Fig. 3: einen Schnitt längs Linie 3-3 in Fig. 2;
- Fig. 4: einen Schnitt längs Linie 4-4 in Fig. 2;
- Fig. 5: eine vergrößerte Schnittdarstellung im Bereich eines Zylinderkopfoberteils;
- Fig. 6: eine Schnittdarstellung ähnlich Fig. 5 durch ein zweites Ausführungsbeispiel eines erfindungsgemäßen Kältemittelverdichters;
- Fig. 7: einen Längsschnitt durch das Gesamtgehäuse gemäß Fig. 2 im Bereich eines Motorgehäuseabschnitts;
- Fig. 8: eine perspektivische Darstellung eines Tragelements zur Montage eines Stators in dem Motorgehäuseabschnitt;
- Fig. 9: einen ausschnittsweise dargestellten Schnitt längs Linie 9-9 in Fig. 7 und
- Fig. 10: einen Längsschnitt ähnlich Fig. 2 durch ein zweites Ausführungsbeispiel eines erfindungsgemäßen Kältemittelverdichters.

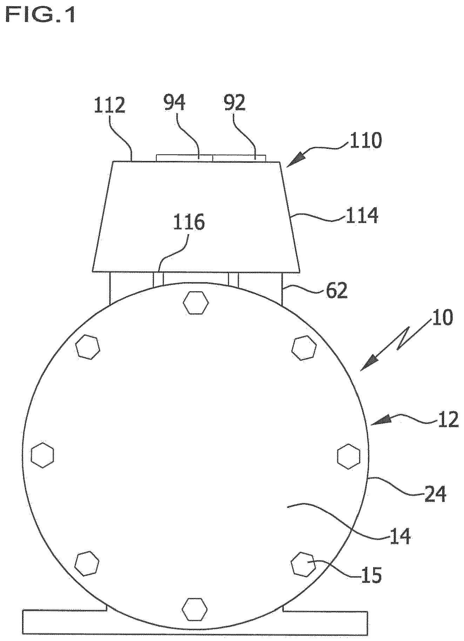

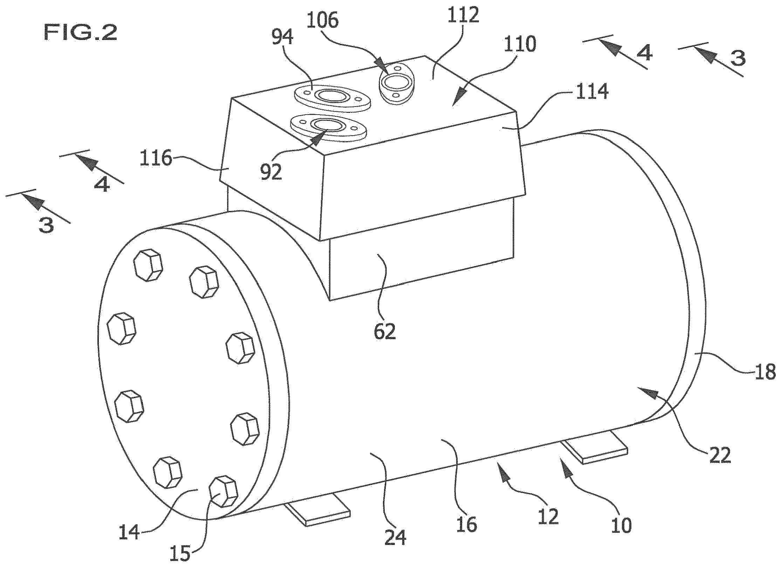

Ein in Fig. 1 und 2 dargestelltes erstes Ausführungsbeispiel eines erfindungsgemäßen Kältemittelverdichters 10 umfasst ein Gesamtgehäuse 12, welches einen ersten stirnseitigen Gehäusedeckel 14 aufweist, von welchem sich ausgehend eine ungefähr zylindrisch, insbesondere kreiszylindrisch, ausgebildete Gehäusehülse 16 bis zu einem zweiten Deckel 18 erstreckt, wobei der erste Deckel 14 und der zweite Deckel 18 die Gehäusehülse 16 jeweils stirnseitig verschließen, und dabei durch Verschraubungen 15, 19 mit der Gehäusehülse 16 verbunden sind.

Somit hat die Gehäusehülse 16 eine äußerst vorteilhafte Querschnittsform, um die auftretenden Druckkräfte möglichst gleichmäßig aufnehmen zu können.

Dieses Gesamtgehäuse 12 umfasst ferner einen Motorgehäuseabschnitt 22, in welchem ein nachfolgend näher zu beschreibender Antriebsmotor angeordnet ist und einen Verdichtergehäuseabschnitt 24, in welchem eine Verdichtereinheit 26 angeordnet ist, welche ein Antriebsgetriebegehäuse 32 aufweist, in welchem eine Antriebswelle 34 um eine Antriebswellenachse 36 drehbar gelagert ist, wobei die Antriebswelle 34 Exzenterkörper 42 trägt, welche auf Pleuel 44 einwirken, die ihrerseits Kolben 46 der Verdichtereinheit 26 antreiben.

Die Kolben 46 sind in einem ebenfalls vom Verdichtergehäuseabschnitt 24 umfassten Zylindergehäuse 52 oszillierend in einzelnen Zylindern 54a, 54b und 54c des Zylindergehäuses 52 bewegbar geführt um Kältemittel zu verdichten.

Das Zylindergehäuse 52 trägt einen Zylinderkopf 56, welcher durch einen an das Zylindergehäuse 52 einstückig angeformtes Zylinderkopfunterteil 62 gebildet ist, das seinerseits noch die Zylinder 54 aufnimmt, wobei das Zylinderkopfunterteil 62 eine die Zylinder 54 abschließende Ventilplatte 64 trägt, auf welcher wiederum auf einer dem Zylinderkopfunterteil 62 gegenüberliegenden Seite ein Zylinderkopfoberteil 66 angeordnet ist.

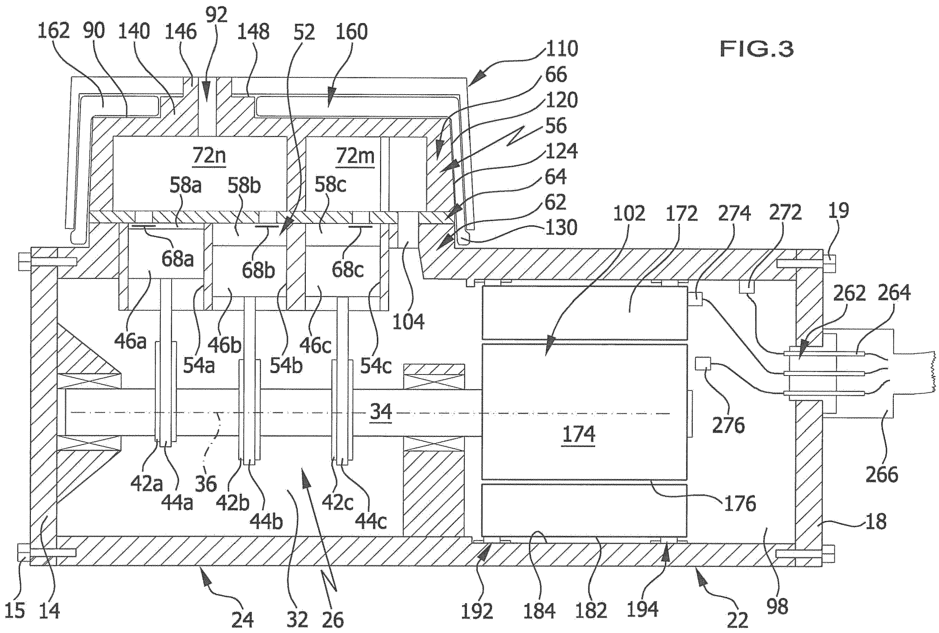

Die Ventilplatte 64 schließt nicht nur einzelne Verdichtungskammern 58a, 58b, 58c der Zylinder 54a, 54b, 54c auf ihren den Kolben 46 gegenüberliegenden Seiten ab, sondern trägt auch Einlass- und Auslassventile, wobei beispielhaft in Fig. 3 lediglich die jeweiligen Einlassventile 68 dargestellt sind.

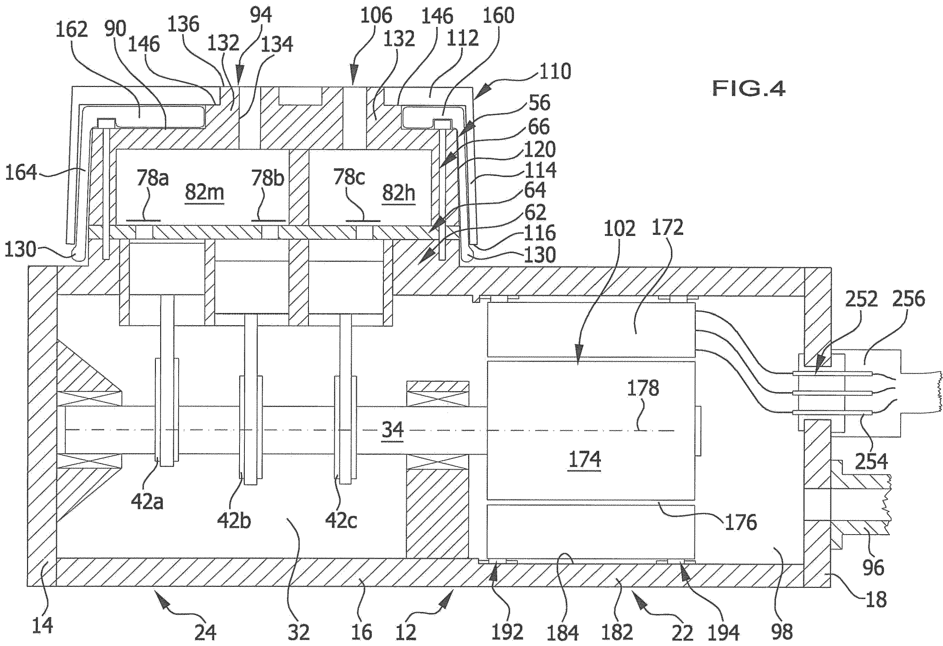

In dem Zylinderkopfoberteil 66 sind gemäß Fig. 3 den Einlassventilen 68 zugeordnete Einlasskammern 72 vorgesehen, während in Fig. 4 Auslassventile 78 in der Ventilplatte 64 dargestellt sind, denen Auslasskammern 82 im Zylinderkopfoberteil 66 zugeordnet sind.

Beispielsweise ist der Kältemittelverdichter 10 als zweistufiger Verdichter ausgebildet, bei welchem über einen auf einer Oberseite 90 des Zylinderkopfoberteils 66 angeordneten Sauganschluss 92 (Fig. 3) auf Saugdruck vorliegendes Kältemittel der Einlasskammer 72n zugeführt wird, von welcher dieses dann über die Einlassventile 68a und 68b in die Verdichtungskammern 58a und 58b eintritt, dort von den Kolben 46a und 46b verdichtet wird und über die Auslassventile 78a und 78b in die Auslasskammer 82m (Fig. 4) eintritt, in welchen dann das Kältemittel auf Mitteldruck verdichtet vorliegt.

Über einen ebenfalls auf der Oberseite 90 des Zylinderkopfoberteils 66 angeordneten Druckanschluss 94 kann dabei beispielsweise das Kältemittel abgeführt, gekühlt und einem Mitteldruckanschluss 96 im Gesamtgehäuse 12 zugeführt werden, wobei der Mitteldruckanschluss 96 vorzugsweise in dem zweiten Gehäusedeckel 18 vorgesehen ist und somit das gekühlte Kältemittel in einen Motorraum 98 im Motorgehäuseabschnitt 22 eintreten lässt, in welchem eine Kühlung eines als Ganzes mit 102 bezeichneten Elektromotors erfolgt und nach Kühlung des Elektromotors 102 das Kältemittel, wie in Fig. 3 dargestellt, wiederum über einen Gehäusedurchlass 104 in die Einlasskammer 72m eintreten kann, von welcher das auf Mitteldruck vorliegende Kältemittel über das Einlassventil 68c in die Verdichtungskammer 58c eintritt, in dieser verdichtet wird und über das Auslassventil 78c in die Auslasskammer 82h im Zylinderkopfoberteil 62 eintritt, in welchem dann das Kältemittel unter Hochdruck vorliegt (Fig. 4).

Von dieser Auslasskammer 82h kann dann das Kältemittel wiederum über einen auf der Oberseite 90 des Zylinderkopfoberteils 66 angeordneten Druckanschluss 106 einem Kältemittelkreislauf zugeführt werden.

Bei dieser Lösung liegt somit im Gesamtgehäuse 12, insbesondere im Antriebsraum 32 und auch im Motorraum 98, auf Mitteldruck verdichtetes Kältemittel vor so dass beispielsweise bei Einsatz des Kältemittelverdichters 10 in einem Kältemittelkreislauf mit CO₂ als Kältemittel bereits im Gesamtgehäuse 10 hohe Drucke von 40 bar und mehr vorliegen.

Um das Gesamtgehäuse 10 mit möglichst geringem Gewicht realisieren zu können, ist die Gehäusehülse 16 mit den Gehäusedeckeln 14 und 18 aus Leichtmetall, insbesondere aus Aluminium, hergestellt und in gleicher Weise auch das an diese angeformte Zylinderkopfunterteil 62. Der Einsatz von Leichtmetall, insbesondere Aluminium, bietet außerdem noch den Vorteil, dass die Gehäusehülse 16 und die Gehäusedeckel 14, 18 korrosionsbeständig sind.

Vorzugsweise ist die Ventilplatte 64 aus Stahl ausgebildet und in gleicher Weise ist auch das Zylinderkopfoberteil 66 ausgebildet, da in dessen Auslasskammern 82m und 82h einerseits Mitteldruck und andererseits Hochdruck vorliegt, der insbesondere bei CO₂ als Kältemittel mehr als 80 bar erreichen kann, so dass diese bei Ausbildung aus Leichtmetall den mechanischen oszillierenden Belastungen nicht standhalten würden.

Zum Schutz des Zylinderkopfes 56, insbesondere des Zylinderkopfoberteils 66 ist eine als Ganzes mit 110 bezeichnete Haube vorgesehen, welche einerseits einen eine Oberseite 90 des Zylinderkopfoberteils 66 übergreifenden Haubendeckel 112 aufweist, von welchem ausgehend sich eine in Richtung der Gehäusehülse 16 erstreckende Haubenschürze 114 verläuft, die in einem Saumbereich 116 endet.

Die Haube 110 dient dabei dazu, den Zylinderkopf 56, insbesondere das Zylinderkopfoberteil 62 und gegebenenfalls auch die Ventilplatte 64, gegen Witterungseinflüsse und aggressive Medien zu schützen.

Um dies zu erreichen, erfolgt zwischen der Haubenschürze 114 und einer Umfangseite 120 des Zylinderkopfes 56 eine Abdichtung mittels eines in Fig. 3 und 4 dargestellten, vorzugsweise als Wulst ausgebildeten, Dichtkörpers 130 aus einem elastischen Material, beispielsweise Silikon, der vorzugsweise zwischen dem Saumbereich 116 und der Umfangseite 120 des Zylinderkopfs 56 verpresst ist, wobei vorzugsweise der Dichtkörper 130 einerseits durch den Saumbereich 116 und andererseits durch einen Umfangsbereich 122 der Umfangseite 120 des Zylinderkopfs 56, der das Zylinderkopfunterteil 62 umschließt, beaufschlagt ist.

Damit kann in einen Zwischenraum zwischen der Haubenschürze 114 mit dem Saumbereich 116 der Haube 110 und der Umfangseite 120 des Zylinderkopfs 56 weder Feuchtigkeit noch ein anderes Medium eindringen, das zu einer Schädigung des Materials der Ventilplatte 64 oder des Zylinderkopfoberteils 66 an seinem Umfangsbereich 124 der Umfangseite 120 führen kann.

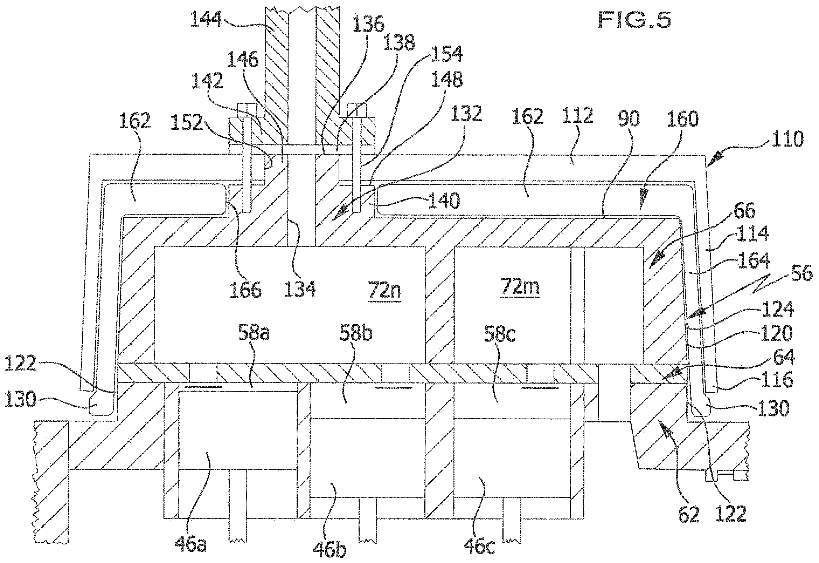

Um auch im Bereich des Haubendeckels 112 kein Eindringen von Feuchtigkeit oder eines anderen Mediums unter die Haube 110 zuzulassen sind vorzugsweise jeweils der Sauganschluss 92 der Druckanschluss 94 und der Druckanschluss 106 durch in dem Zylinderkopfoberteil 66 angeordnete und über dieses auf der der Ventilplatte 64 gegenüberliegenden Oberseite 90 überstehende Anschlussansätze 132 gebildet, die einen zu der jeweiligen Einlasskammer 72 beziehungsweise Auslasskammer 82 führenden Durchlass 134 umschließen und auf einer der Oberseite 90 abgewandten Seite eine Dichtfläche 136 bilden, auf welche eine Dichtung 138, insbesondere eine Flachdichtung, auflegbar ist, die ihrerseits durch einen mit einer Anschlussleitung 144 verbundenen Anschlussflansch 142 bei einer Verschraubung derselben mit dem jeweiligen Anschlussansatz 132 des Zylinderkopfoberteils 66 gegen die Dichtfläche 136 gepresst werden kann (Fig. 5).

Vorzugsweise ist der Anschlussansatz 132 jeweils so ausgebildet, dass dieser einen Fußbereich 140 aufweist, von welchem sich ein den Durchlass 134 umschließender Anschlussfortsatz 146 bis zur Dichtfläche 136 erstreckt und im Abstand von der Dichtfläche 136 eine Stufe 148 bildet, die um den Anschlussfortsatz 146 und den Durchlass 134 umlaufend ausgebildet ist und eine Auflage für den im Bereich des jeweiligen Anschlussansatzes 132 mit einem den Anschlussfortsatz 146 umgreifenden und einen Durchbruch 152 aufweisenden Randbereich 154 versehenen Haubendeckel 112 bildet, so dass der Haubendeckel 112 insbesondere durch die an dem Sauganschluss 92, dem Druckanschluss 94 sowie dem Druckanschluss 106 jeweils gebildeten Stufe 148 jeweils im Abstand von dem Zylinderkopfoberteil 66, insbesondere der Oberseite 90 desselben, gehalten werden kann (Fig. 5).

Vorzugsweise ist zwischen der Haube 110 und dem Zylinderkopfoberteil 66 ein als Ganzes mit 160 bezeichnetes Dichtelement angeordnet, welches vorzugsweise auf der Oberseite 90 des Zylinderkopfoberteils 66 mit einem Auflagekörper 162 aufliegt, der mit Aussparungen 166 versehen ist, so dass die Anschlussansätze 132 diesen durchdringen können und der Auflagekörper 162 somit die Anschlussansätze 132 umschließt.

Ferner erstreckt sich von dem Auflagekörper 162 ein Mantelkörper 164 des Dichtelements 160 bis zu dem Dichtkörper 130, welcher einstückig an den Mantelkörper 164 angeformt ist.

Der Mantelkörper 164 liegt dabei zwischen der Umfangseite 120 des Zylinderkopfes 56 und der Haubenschürze 114, wobei im Bereich des Mantelkörpers 164 eine Abdichtung zwischen der Umfangseite 120 und der Haubenschürze 114 erfolgen kann, nicht jedoch zwingend erforderlich ist, da die primäre Abdichtung durch den Dichtkörper 130 erfolgt, der zwischen dem Saumbereich 116 der Haube 110 und dem Umfangsbereich 122 des Zylinderkopfunterteils 62 seine Dichtwirkung entfaltet.

Es ist aber prophylaktisch dennoch möglich, durch geeignete Ausbildung des Mantelkörpers 164, beispielsweise durch in diesen eingeformte Wülste oder Rippen, ebenfalls noch eine zusätzliche Dichtwirkung zu erhalten.

Auch der Auflagekörper 162 ist prinzipiell nicht so ausgebildet, dass er eine flächendeckende Abdichtung zwischen dem Haubendeckel 112 der Haube 110 und der Oberseite 90 des Zylinderkopfoberteils 66 bewirkt, vorteilhafterweise ist jedoch der Auflagekörper 162 so ausgebildet, dass er zwischen dem Haubendeckel 112 und der Oberseite 90 in Bereichen um die Anschlussansätze 132 des Zylinderkopfoberteils 66 eine zusätzliche Abdichtung schafft.

Primär dienen jedoch der Auflagekörper 162 sowie der Mantelkörper 164 zur präzisen und zuverlässigen und dauerhaften Positionierung des Dichtkörpers 130 so dass dieser dauerhaft und zuverlässig seine Dichtwirkung zwischen dem Saumbereich 116 und dem Zylinderkopfunterteil 62 im Umfangsbereich 122 entfalten kann, der einen Teil der Umfangseite 120 des Zylinderkopfes 56 darstellt.

Vorzugsweise ist dabei das Dichtelement 160 mit dem Auflagekörper 162, dem Mantelkörper 164 und dem Dichtkörper 130 als einstückiges vorgeformtes Teil aus einem Silikonmaterial ausgebildet, welches sich als Ganzes über den Zylinderkopf 56, insbesondere das Zylinderkopfoberteil 66 desselben, stülpen lässt, bevor ein Aufsetzen der Haube 110 erfolgt.

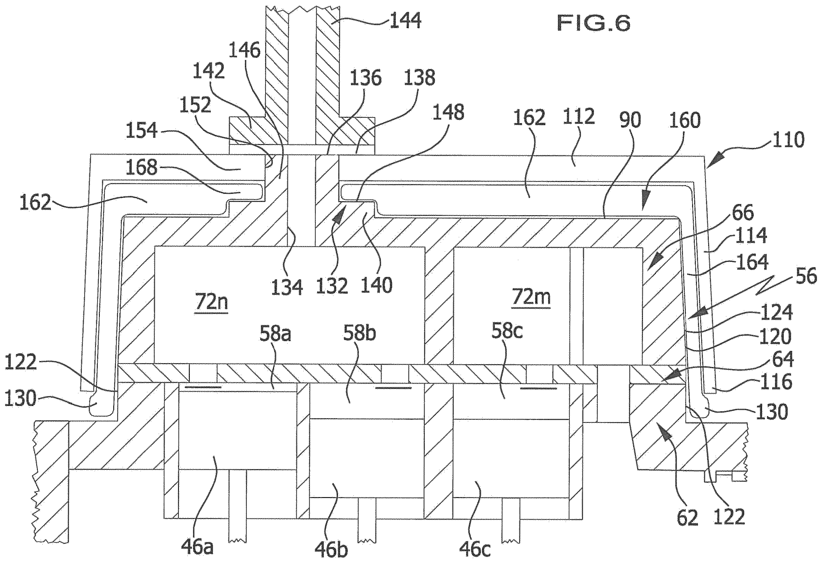

Bei einem zweiten Ausführungseispiel der erfindungsgemäßen Lösung dargestellt in Fig. 6, ist der Auflagekörper 162 im Bereich der Aussparungen 166 mit einem bis zum Anschlussfortsatz 146 reichenden Ringflansch 168 versehen, der auf der Stufe 148 aufliegt und auf dem seinerseits der Haubendeckel 112 mit seinem den Durchbruch 152 tragenden Randbereich 154 aufliegt, so dass der Randbereich 154 aufgrund der Ausbildung des Ringflansches 168 aus dem elastischen Material des Dichtelements 160 auf der Stützfläche 148 nachgiebig abgestützt ist und damit eine Kompensation von Dickentoleranzen im Randbereich 154 möglich ist, so dass die durch den durch Verschraubungen beaufschlagten Anschlussflansch 142 beaufschlagte Dichtung 138 auch noch im Randbereich 154 des Haubendeckels 112 einen dichten Anschluss bewirken kann und außerdem die Haube 110 als Ganzes fixiert.

Als weitere Alternative zum ersten und zweiten Ausführungsbeispiel sind auch Lösungen denkbar, bei welchen Anschlussfortsätze nicht auf der Oberseite 90 des Zylinderkopfoberteils 66 angeordnet sind, sondern an der Umfangseite 120 desselben.

Auch in diesem Fall besteht die Möglichkeit, durch das Dichtelement 160 im Bereich der Anschlussansätze 132 eine Abdichtung zu erreichen, in analoger Weise wie im Bereich der Oberseite des Zylinderkopfoberteils 66.

Beispielsweise könnte in diesem Fall die Haube 110 zweiteilig ausgeführt sein.

Bei einem weiteren Ausführungsbeispiel ist das Zylinderkopfoberteil 66 mit keinerlei Anschlussansatz versehen und kann ebenfalls in gleicher Weise wie bei den bisherigen Lösungen beschrieben, durch die Haube 110 überdeckt werden.

Im Übrigen sind bei dem zweiten Ausführungsbeispiel diejenigen Elemente, die mit dem ersten Ausführungsbeispiel identisch sind, mit demselben Bezugszeichen versehen, so dass diesbezüglich auf die Ausführungen zum ersten Ausführungsbeispiel Bezug genommen werden kann.

Wie in den Fig. 3 und 4 dargestellt, ist bei beiden Ausführungsbeispielen in dem Motorraum 98 des Gesamtgehäuses 12 der Elektromotor 102 angeordnet, welcher einen Stator 172 aufweist, der in dem Motorgehäuseabschnitt 22 drehfest gelagert ist und einen Rotor 174, der vom Stator 172 umschlossen und um eine Rotorachse 178 drehbar ist, die bei den vorliegenden Ausführungsbeispielen mit der Antriebswellenachse 36 zusammenfällt.

Zwischen dem Rotor 174 und dem Stator 172 ist dabei ein Spalt 176 ausgebildet.

Die Lagerung des Stators 172 in dem Motorgehäuseabschnitt 22 erfolgt vorzugsweise, wie in Fig. 3, 4 und 7 dargestellt, durch zwischen einer Außenseite 182 des Stators 172 und einer Statoraufnahmefläche 184 des Motorgehäuseabschnitts 22 wirksame Tragelemente 192 und 194, die in radialer Richtung zur Rotorachse 178 federelastisch deformierbar sind und den Stator 172 relativ zur Statoraufnahmefläche 184 abstützen.

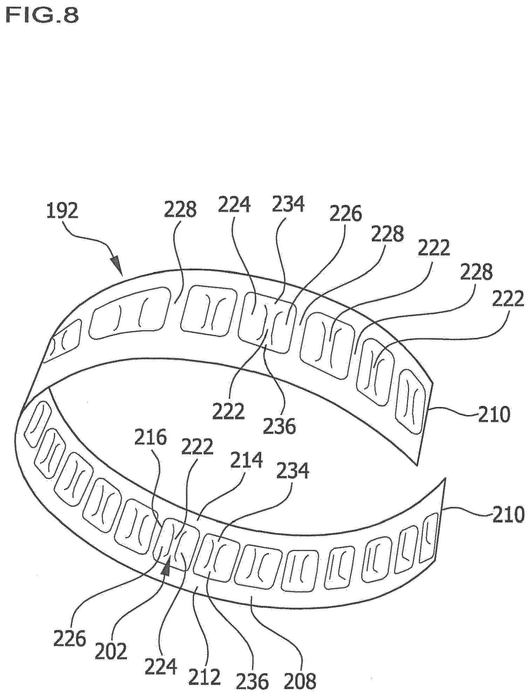

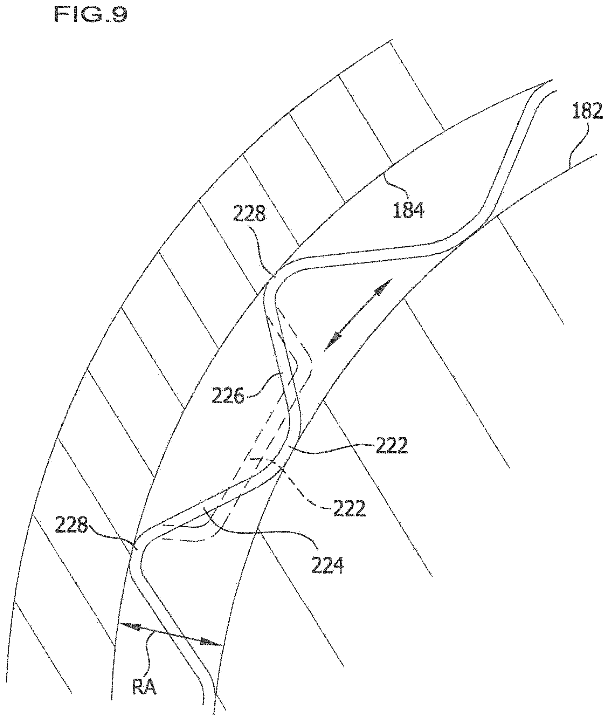

Vorzugsweise umfasst jedes der Tragelemente 192, 194 wie beispielsweise in Fig. 8 und 9 dargestellt, in radialer Richtung zur Rotorachse 178 federelastisch deformierbare Körper 202, die beispielsweise den Stator 172 an der Außenseite 182 abstützen, und in Richtung der Rotorachse 178 gesehen beiderseits der federelastisch deformierbaren Körper 202 angeordnete und die elastischen Körper 202 miteinander verbindende Halteelemente 204 und 206, die sich an der Statoraufnahmefläche 184 des Motorgehäuseabschnitts 22 abstützen.

Es ist aber auch möglich, dass sich die Halteelemente 204 und 206 an der Außenseite 182 des Stators 172 und die elastisch deformierbaren Körper 202 an der Statoraufnahmefläche 184 des Motorgehäuseabschnitts 22 abstützen.

Wie in Fig. 8 und 9 exemplarisch im Zusammenhang mit dem Tragelement 192 dargestellt, lassen sich diese Tragelemente 192, 194 durch ein Bandmaterial 208 in Form einer ringförmigen Spange mit im Abstand voneinander stehenden Enden 210 realisieren, dessen Randbereiche 212 und 214 die Halteelemente 204 und 206 bilden und in dessen Mittelbereich 216 die elastisch deformierbaren Körper 202 durch in das Bandmaterial 208 eingeprägte Strukturen gebildet sind, die sich zwischen den Randbereichen 212 und 214 erheben und Abstützbereiche 222 bilden, die an der Außenseite 182 des Stators 172 anliegen und über ansteigende und in einen spitzen Winkel zur diese abstützenden Fläche, in Fig. 9 zur Statoraufnahmefläche 184, verlaufende Flankenbereiche 224 und 226 in Umlaufrichtung um die Rotorachse 178 mit Fußbereichen 228 verbunden sind, die an der Statoraufnahmefläche 184 anliegen, und außerdem in Richtung parallel zur Rotorachse 178 über in einem spitzen Winkel zur abstützenden Statoraufnahmefläche 184 verlaufende Flankenbereiche 234 und 236 mit den Randbereichen 212 und 214 verbunden sind, die ebenfalls an der Statoraufnahmefläche 184 anliegen.

Durch die Ausbildung der Tragelemente 192, 194 aus einem Bandmaterial 208 mit im Abstand voneinander angeordneten Enden 210 lassen sich diese spanfrei in die Statoraufnahmefläche 184 einsetzen.

Insbesondere bilden die Flankenbereiche 234 und 236 Einschubschrägen, die eine spanfreie Montage oder Demontage des Stators 172 ermöglichen.

Insbesondere erlauben die Tragelemente 192, 194 die Montage des "harten" Stators 172 im "weichen" Motorgehäuseabschnitt 22 wenn dieses aus Leichtmetall, insbesondere Aluminium ausgebildet ist, ohne dass im Motorgehäuseabschnitt 22 Verletzungen desselben auftreten das gleiche gilt beim Auswechseln des Elektromotors 102.

Im Übrigen ist auch in diesem Fall die Ausbildung der Gehäusehülse 16 mit einer möglichst kreiszylindrischen Querschnittsform von Vorteil, da auch in diesem Fall die zur Aufnahme des Elektromotors 102 erforderlichen Kräfte und die Druckkräfte im Motorgehäuseabschnitt 22 optimal aufgenommen werden können, insbesondere ohne nennenswerte Aufweitung des Motorgehäuseabschnitts 22, so dass wiederum eine präzise Lagerung des Elektromotors 102 durch die Tragelemente 192 und 194 möglich ist.

Durch die mit geringer Steigung zur diese abstützenden Fläche, in Fig. 9 zur Statoraufnahmefläche 184, verlaufenden Flankenbereiche 224 und 226 sowie 234 und 236 erfolgt die federelastische Deformation der deformierbaren Körper 202 in erster Linie in den Flankenbereichen 224, 226 und 234 und 236, wie in Fig. 9 bei den Flankenbereichen 224 und 226 gestrichelt dargestellt.

Vorzugsweise sind die federelastischen Körper 202 so ausgebildet, dass sie sämtlichen Variationen des radialen Abstands RA (Fig. 9) zwischen der Außenseite 182 des Stators 172 und der Statoraufnahmefläche 184 durch elastische Deformation folgen, ohne dass sich plastische Deformationen im Bereich der elastischen Körper 202, insbesondere der Flankenbereiche 224, 226 sowie 234 und 236, einstellen.

Dadurch besteht die Möglichkeit, unabhängig von der thermischen und/oder druckbedingten radialen Ausdehnung des Motorgehäuseabschnitts 22 sowie der thermisch bedingten radialen Ausdehnung des Stators 172 den Stator 172 stets koaxial zur Rotorachse 178 zu halten.

Derartige druckbedingte radiale Ausdehnungen des Motorgehäuseabschnitts 22 treten insbesondere dadurch auf, dass der Motorraum 98 auf Mitteldruck liegt und die Gehäusehülse 16 des Gesamtgehäuses 12 aus Leichtmetall hergestellt ist.

Zusätzlich zu der Druckbelastung des Motorgehäuseabschnitts 22 kommt noch eine thermische Aufweitung je nach Betriebszustand des Stators 172 und des Motorgehäuseabschnitts 22 hinzu.

Da sämtliche derartigen Deformationen, die sich in einer Veränderung des radialen Abstands RA auswirken, durch die federelastischen Körper 202 in Form rein elastischer Deformationen aufgenommen werden, kann ein optimal geringer Spalt 176 zwischen dem Rotor 174 und dem Stator 172 unabhängig vom Betriebszustand des Kältemittelverdichters aufrechterhalten werden.

Dadurch, dass sämtliche elastischen Elemente 202 beispielsweise in einem Bandmaterial 208 angeordnet sind und relativ zueinander durch die Halteelemente 204 und 206 in ihren Positionen gehalten werden, können die Halteelemente 204 und 206 um den Stator 172 nahezu geschlossen umlaufend in senkrecht zur Rotorachse 178 verlaufenden Ebenen liegen und dadurch die elastischen Elemente 202 relativ zur Außenseite 182 des Stators 172 und zur Statoraufnahmefläche 184 in definierten Positionen halten.

Zur exakten Positionierung der Tragelemente 192 und 194 im Motorgehäuseabschnitt 122 ist vorzugsweise im Anschluss an die Rotoraufnahmefläche 184 und zwar auf einer dem Antriebsraum 22 zugewandten Seite eine um die Rotorachse 178 umlaufende Stufe 242 vorgesehen, die zur Positionierung eines des dem Antriebsraum 32 zugewandten Tragelements 192 dient.

Um das zweite Tragelement 194 exakt relativ zum ersten Tragelement 192 positionieren zu können, wäre es prinzipiell denkbar, in dem Motorgehäuseabschnitt 22 ebenfalls eine Stufe vorzusehen, dies würde jedoch eine weitere Schwächung einer Wandstärke des Motorgehäuseabschnitts 22 bedeuten.

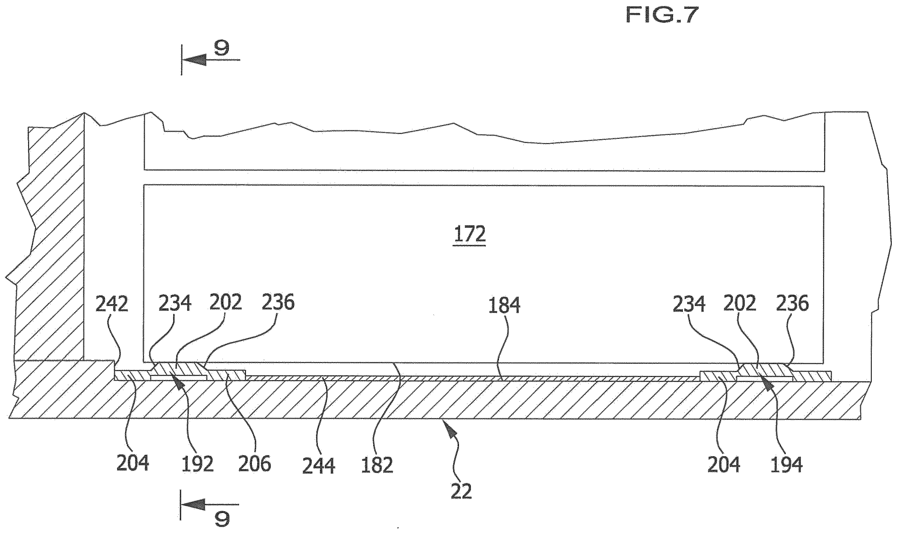

Aus diesem Grund ist zwischen den Tragelementen 192 und 194 wie in Fig. 7 dargestellt, ein Distanzelement 244 vorgesehen, welches beispielsweise an den Halteelementen 206 und 204 des Tragelements 194 beziehungsweise 192 anliegt und somit die exakte Lage des zweiten Tragelements 194 relativ zum ersten Tragelement 192 vorgibt.

Das Distanzelement 244 ist beispielsweise so ausgebildet, dass es an der Statoraufnahmefläche 184 des Motorgehäuseabschnitts 22 anliegt und die Rotorachse 178 teilweise oder vollständig umschließend verläuft, um die Tragelemente 192 und 194 im Bereich ihres gesamten Verlaufs um die Rotorachse 178 relativ exakt positioniert zu halten.

Beispielsweise sind die Tragelemente 192, 194 und/oder das Distanzelement 244 durch ringförmige Blechelemente, insbesondere aus Bandmaterial 208, mit im Abstand voneinander stehenden Enden 210 gebildet, welche die Tendenz haben, sich in radialer Richtung aufzuweiten, so dass diese Blechelemente sich selbsttätig an der Statoraufnahmefläche 184 anlegten und durch Reibschluss fixiert sind.

Dadurch lassen sich die Tragelemente 192, 194 und gegebenenfalls auch das Distanzelement 244 spanfrei in die Statoraufnahmefläche 184 einsetzen.

Zur elektrischen Versorgung des Elektromotors 102 ist vorzugsweise in dem zweiten Deckel 18 ein Kontakteinsatz 252 vorgesehen, welcher elektrische Kontaktelemente 254 aufnimmt, die durch den zweiten Deckel 18 hindurchgeführt sind (Fig. 4).

Auf einer dem Motorraum 98 abgewandten Seite ist auf den Kontakteinsatz 252 ein Kontaktstecker 256 aufsteckbar, über welchen eine Kontaktierung sämtlicher im Kontakteinsatz 252 aufgenommener Kontaktelemente 254 erfolgt.

Ferner ist in dem zweiten Deckel 18 (Fig. 3) ein zweiter Kontakteinsatz 262 vorgesehen, welcher zusätzliche elektrische Kontaktelemente 264 aufweist. Vorzugsweise dienen diese zusätzlichen Kontakte 264 zur Herstellung von elektrischen Verbindungen mit im Gesamtgehäuse 12 angeordneten Sensoren, beispielsweise Drucksensoren 272, und/oder Temperatursensoren 274 und/oder Drehzahlsensoren 276, welche zur Überwachung der Verdichterfunktion und der Motorfunktion dienen, so dass vorzugsweise eine elektrische Zuleitung zu sämtlichen für die Verdichterfunktion und/oder der Motorfunktion dienenden und im Gesamtgehäuse 12 angeordneten Sensoren über den Kontakteinsatz 262 und einen Kontaktstecker 266 erfolgt.

Es ist aber auch möglich sämtliche elektrischen Kontaktelemente 254 und 264 in einem entsprechend komplex ausgebildeten Kontakteinsatz vorzusehen.

Darüber hinaus ist in dem zweiten Deckel 18 (Fig. 4) ebenfalls noch der Mitteldruckanschluss 96 vorgesehen, über welchen direkt unter Mitteldruck stehendes Kältemittel dem Motorraum 98, und zwar auf einer dem Antriebsraum 32 gegenüberliegenden Seite, zuführbar ist, welches dabei den Elektromotor 102 durchströmt, diesen kühlt und dann in die Einlasskammer 72m eintritt.

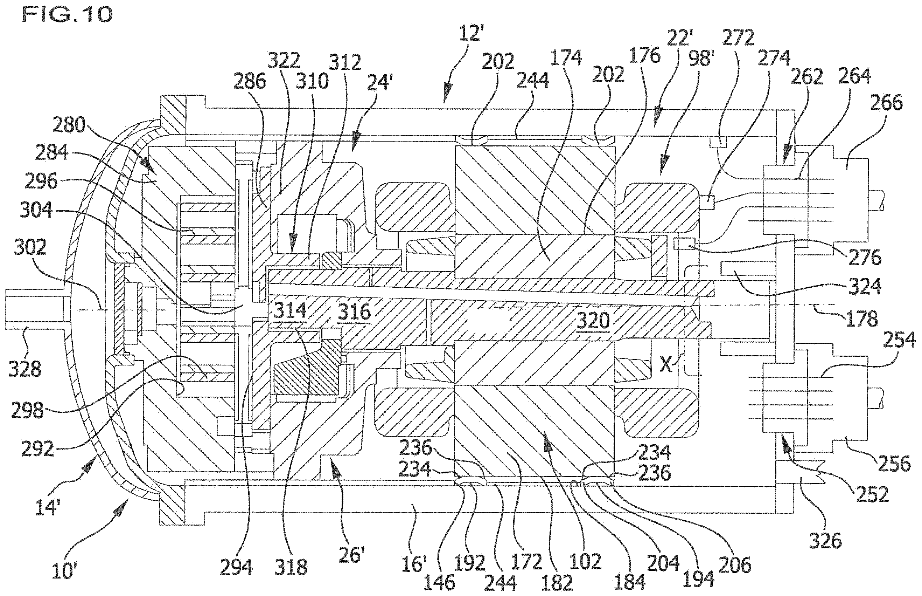

Bei einem zweiten Ausführungsbeispiel, dargestellt in Fig. 10, sind diejenigen Elemente, die mit denen des ersten Ausführungsbeispiels identisch sind, mit denselben Bezugszeichen versehen, so dass diesbezüglich auf die Ausführungen zum ersten Ausführungsbeispiel Bezug genommen werden kann.

Insbesondere umfasst das zweite Ausführungsbeispiel eines erfindungsgemäßen Kältemittelverdichters 10' ein Gesamtgehäuse 12', welches einen ersten stirnseitigen Gehäusedeckel 14' aufweist, von dem sich ausgehend eine ungefähr zylindrische, insbesondere kreiszylindrisch ausgebildete Gehäusehülse 16' bis zu einem zweiten Deckel 18' erstreckt, wobei der erste Deckel 14' und der zweite Deckel 18' die Gehäusehülse 16' jeweils stirnseitig verschließen und dabei mit der Gehäusehülse 16' verbunden sind.

Die Gehäusehülse 16' hat auch beim zweiten Ausführungsbeispiel eine äußerst vorteilhafte Querschnittsform, um die auftretenden insbesondere radial wirkenden Druckkräfte, die insbesondere bei Verwendung von CO₂ als Kältemittel, auftreten, gleichmäßig aufnehmen zu können.

Dieses Gesamtgehäuse 12' umfasst ebenfalls den Motorgehäuseabschnitt 22', in welchem der Motorraum 98' zur Aufnahme des Elektromotors 102 angeordnet ist, und einen Verdichtergehäuseabschnitt 24', in welchem eine Verdichtereinheit 26' angeordnet ist, die allerdings als Spiralverdichter 280, oder auch Scroll-Verdichter genannt, ausgebildet ist.

Insbesondere umfasst dabei der Spiralverdichter 280, einen ersten, feststehend im Verdichtergehäuseabschnitt 24 angeordneten Verdichterkörper 284 und einen zweiten, bewegbar in dem Verdichtergehäuseabschnitt 24 angeordneten Verdichterkörper 286, die jeweils sich über einem Boden 292, beziehungsweise 294 erhebende Spiralrippen 296 beziehungsweise 298 aufweisen, die so ineinandergreifen, dass zum Verdichten von Kältemittel der zweite Verdichterkörper 286 gegenüber dem ersten Verdichterkörper 284 auf einer Orbitalbahn um eine Mittelachse 302 bewegbar ist.

Ferner ist der zweite Verdichterkörper 286 beispielsweise durch eine bekannte Oldhamkupplung 304 relativ zum stationär angeordneten ersten Verdichterkörper 284 geführt.

Der Spiralverdichter 280 wird dabei durch ein als Ganzes mit 310 bezeichnetes Antriebsgetriebe angetrieben, welches eine fest mit dem zweiten Verdichterkörper 286 verbundene, vorzugsweise einstückig an diesen angeordnete Exzenteraufnahme 312 umfasst, an welcher ein um die Mittelachse 302 rotierender Exzenter 314 angreift, um den zweiten Verdichterkörper 286 auf der Orbitalbahn um die Mittelachse 302 zu bewegen.

Vorzugsweise greift der Exzenter 314 in eine von der Exzenteraufnahme 312 gebildete Aufnahme 316 ein, und liegt an dieser mit Außenmantelflächen 318 an.

Alternativ dazu ist es aber auch denkbar, dass der Exzenter 314 die Exzenteraufnahme 312 außenseitig umgreift.

Der Exzenter 314 ist dabei an eine als Ganzes mit 320 bezeichnete Antriebswelle angeformt, die koaxial zur Mittelachse 34 drehbar gelagert ist und ungefähr parallel zu einer Mittelachse der Gehäusehülse 16' verläuft.

Hierzu ist die Antriebswelle 320 an einer dem Spiralverdichter 280 zugewandten ersten Lagereinheit 322 gelagert, und auf einer gegenüberliegenden Seite in einer zweiten Lagereinheit 324, die beispielsweise an dem zweiten Deckel 18' gehalten ist.

Somit sind beide Lagereinheiten 322 und 324 unmittelbar oder mittelbar an dem Gesamtgehäuse 12' des Kältemittelverdichters 10' abgestützt und halten dabei die Antriebswelle 320 im Wesentlichen liegend in diesem.

Auch bei dem zweiten Ausführungsbeispiel ist der Stator 172 des Elektromotors 102 an dem Motorgehäuseabschnitt 22 durch die Tragelemente 192 und 194 abgestützt, die in gleicher Weise wie bei dem ersten Ausführungsbeispiel ausgebildet sind und auch in gleicher Weise den Stator 172 jeweils auf gegenüberliegenden Seiten der Rotorachse 178, die koaxial zur Antriebswelle 320 angeordnet ist, abstützen.

Dabei sind die Tragelemente 192, 194 zwischen der Außenseite 182 des Stators 172 und der Statoraufnahmefläche 184 angeordnet und in gleicher Weise wie beim ersten Ausführungsbeispiel ausgebildet und wirksam.

Folglich wird hinsichtlich sämtlicher Merkmale der Tragelemente 192 und 194 sowie deren Zusammenwirken mit dem Stator 172 vollinhaltlich auf die Ausführungen zum ersten Ausführungsbeispiel so wie die Zeichnerische Darstellung in den Fig. 8 und 9 Bezug genommen.

Somit besteht auch beim zweiten Ausführungsbeispiel die Möglichkeit, den Stator 172 einerseits federelastisch relativ zur Statoraufnahmefläche 184 abzustützen, um Durchmesservariationen der Statoraufnahmefläche 184 und des Motorgehäuseabschnitts 22' kompensieren zu können und gleichzeitig den Stator 172 zentriert in dem Motorgehäuseabschnitt 22' zu halten.

Außerdem wird dabei ermöglicht, den Spalt 176 zwischen dem Stator 172 und dem Rotor 174 möglichst gering zu halten und somit eine hohe Effizienz des Elektromotors 102 zu erreichen, wie ebenfalls im Zusammenhang mit dem ersten Ausführungsbeispiel beschrieben.

Zur elektrischen Versorgung des Elektromotors 102 ist in gleicher Weise wie beim ersten Ausführungsbeispiel in dem zweiten Deckel 18' ein Kontakteinsatz 252 vorgesehen, welcher elektrische Kontakte 254 aufnimmt, die durch den zweiten Deckel 18' hindurchgeführt sind, wie ebenfalls in Fig. 10 dargestellt.

Auf einer dem Motorraum 98 abgewandten Seite ist auf den Kontakteinsatz 252 ein Kontaktstecker 256 aufsteckbar, über welchen eine Kontaktierung sämtlicher im Kontakteinsatz 252 aufgenommener Kontaktelemente 254 erfolgt.

Darüber hinaus ist in dem zweiten Deckel 18' ein zweiter Kontakteinsatz 262 vorgesehen, welcher zusätzliche elektrische Kontaktelemente 264 aufweist, die vorzugsweise dazu dienen, elektrische Verbindungen mit im Gesamtgehäuse angeordneten Sensoren, beispielsweise den Drucksensoren 272 und/oder den Temperatursensoren 274 und/oder Drehzahlsensoren 276 herzustellen, welcher zur Überwachung der Verdichterfunktion und der Motorfunktion dienen.

In gleicher Weise wie beim ersten Ausführungsbeispiel erfolgt eine Kontaktierung der Kontaktelemente 264 des Kontakteinsatzes 262 mit einem Kontaktstecker 266.

Darüber hinaus ist der zweite Deckel 18' ebenfalls noch mit einem Sauganschluss 326 versehen, über welchen sich anzusaugendes Kältemittel dem Motorraum 98' zuführen lässt, das nach Durchsetzen des Motorraums 98' die in den Spiralverdichter 280 eintritt, von diesem verdichtet wird und als verdichtetes Kältemittel ein über einen Druckanschluss 328 im ersten Deckel 14' abgeführt wird.

## Patentansprüche

1. Kältemittelverdichter (10) umfassend ein Gesamtgehäuse (12) mit einem Motorgehäuseabschnitt (22), in welchem ein Motorraum (98) mit einem in diesem vorgesehenen Elektromotor (102), umfassend einen Stator (172) und einem Rotor (174), angeordnet ist, und einem Verdichtergehäuseabschnitt (24), welcher eine Verdichtereinheit aufweist, wobei das Gesamtgehäuse (12) einen ersten Deckel (14) und einen zweiten Deckel (18) aufweist, zwischen denen sich eine Gehäusehülse (16) erstreckt, die den Motorgehäuseabschnitt (22) sowie den Verdichtergehäuseabschnitt (24) aufweist, in welchem ein Zylindergehäuse (52) vorgesehen ist, wobei das Zylindergehäuse (52) einen Zylinderkopf (56) trägt, wobei die Gehäusehülse (16) mit den Gehäusedeckeln (14, 18) aus Leichtmetall, insbesondere aus Aluminium, hergestellt ist, **dadurch gekennzeichnet, dass** der Zylinderkopf (56) durch ein an das Zylindergehäuse (52) angeformtes Zylinderkopfunterteil (62), das seinerseits noch die Zylinder (54) aufnimmt, gebildet ist, dass das an die Gehäusehülse (16) angeformte Zylinderkopfunterteil (62) aus Leichtmetall, insbesondere aus Aluminium, hergestellt ist, dass das Zylinderkopfunterteil (62) eine die Zylinder (54) abschließende Ventilplatte (64) trägt, auf welcher wiederum auf einer dem Zylinderkopfunterteil (62) gegenüberliegenden Seite ein Zylinderkopfoberteil (66) angeordnet ist, dass die Ventilplatte (64) und das Zylinderkopfoberteil (66) aus Stahl ausgebildet sind, und dass die Gehäusehülse (16) eine näherungsweise zylindrische, insbesondere kreiszylindrische, Form aufweist.

2. Kältemittelverdichter (10) nach Anspruch 1, **dadurch gekennzeichnet, dass** der Kältemittelverdichter für CO₂ als Kältemittel ausgelegt ist.

3. Kältemittelverdichter (10) nach Anspruch 1 oder 2, **dadurch gekennzeichnet, dass** mindestens ein Kontakteinsatz (252, 262) zur Durchführung elektrischer Zuleitungen in das Gesamtgehäuse (12) in einem der Deckel (14, 18) vorgesehen ist.

4. Kältemittelverdichter (10) nach Anspruch 3, **dadurch gekennzeichnet, dass** sämtliche in das Gesamtgehäuse (12) geführten elektrischen Leitungen über mindestens einen Kontakteinsatz (252, 262) in mindestens einem der Deckel (14, 18) des Gesamtgehäuses (12) geführt sind.

5. Kältemittelverdichter (10) nach Anspruch 4, **dadurch gekennzeichnet, dass** die in das Gesamtgehäuse (12) geführten elektrischen Leitungen einerseits Stromzuleitungen zu dem Elektromotor (102) und andererseits Leitungen zu verschiedensten, im Gesamtgehäuse (12) angeordneten Sensoren (272, 274, 276) zur Überwachung des Elektromotors (102) und/oder der Funktion des Kältemittelverdichters (10) sind.

6. Kältemittelverdichter (10) nach einem der voranstehenden Ansprüche, **dadurch gekennzeichnet, dass** das Zylinderkopfunterteil (62)das Zylinderkopfoberteil (66) mit mindestens einer in diesem integrierten Auslasskammer (82) trägt, und dass in das Gesamtgehäuse (12) geführte Kältemittelanschlüsse (94, 96, 106) entweder in dem Zylinderkopfoberteil (66) oder in einem der Deckel (14, 18) angeordnet sind.

7. Kältemittelverdichter (10) nach einem der voranstehenden Ansprüche, **dadurch gekennzeichnet, dass** dieser ein zweistufiger Verdichter ist und dass in dem Zylinderkopfoberteil (66) eine Auslasskammer (78) für Mitteldruck und eine Auslasskammer (78) für Hochdruck vorgesehen ist.

8. Kältemittelverdichter (10) nach einem der voranstehenden Ansprüche, **dadurch gekennzeichnet, dass** der Stator (172) in dem Motorgehäuseabschnitt (98) mittels in den Motorgehäuseabschnitt (98) eingesetzten Tragelementen (192, 194) gelagert ist, die einerseits an einer Statoraufnahmefläche (184) des Motorgehäuseabschnitts (22) anliegen und andererseits den in die Tragelemente (192, 194) eingesetzten Stator (172) an seiner Außenseite (182) umfassen und federelastisch relativ zur Statoraufnahmefläche (184) abstützen.

9. Kältemittelverdichter (10) nach Anspruch 8, **dadurch gekennzeichnet, dass** die Tragelemente (192, 194) federelastische Körper (202) aufweisen, die so dimensioniert sind, dass sie in allen beim Betrieb des Kältemittelverdichters (10) auftretenden Betriebszuständen des Motorgehäuseabschnitts (184) in elastisch deformiertem Zustand sind.

10. Kältemittelverdichter (10) nach Anspruch 8 oder 9, **dadurch gekennzeichnet, dass** die Tragelemente (192, 194) um den Stator (172) herum verlaufend angeordnet sind und den Stator (172) jeweils auf gegenüberliegenden Seiten der Rotorachse (178) mehrfach relativ zur Statoraufnahmefläche (184) des Motorgehäuseabschnitts (22) abstützen.

11. Kältemittelverdichter (10) nach einem der Ansprüche 8 bis 10, **dadurch gekennzeichnet, dass** die Tragelemente (192, 194) in definierten Winkelabständen um die Rotorachse (178) herum angeordnete elastische Körper (202) aufweisen.

12. Kältemittelverdichter (10) nach einem der Ansprüche 8 bis 11, **dadurch gekennzeichnet, dass** die elastischen Körper (202) durch ein diese relativ zueinander positionierendes und um den Stator (172) umlaufendes Bandmaterial (208) relativ zueinander positioniert sind, dass insbesondere die elastischen Körper (202) in das Bandmaterial (208) eingeformt sind, dass insbesondere das Bandmaterial (208) als ringähnliche Spange mit offenen Enden (210) ausgebildet ist.

13. Kältemittelverdichter (10) nach einem der Ansprüche 8 bis 12, **dadurch gekennzeichnet, dass** die federelastischen Körper (202) in einem spitzen Winkel zur Außenseite (182) des Stators (172) und/oder zur Statoraufnahmefläche (184) zwischen Fußbereichen (228) und Abstützbereichen (222), von denen die einen an der Außenseite (182) des Stators (172) und die anderen an der Statoraufnahmefläche (184) anliegen, verlaufende Flankenbereiche (224, 226, 234, 236) aufweisen und/oder dass insbesondere die federelastischen Körper (202) aufeinanderfolgend in ein federelastisches Bandmaterial (208) eingeformt sind, so dass aufeinanderfolgende Abstützbereiche (222) an einer Außenseite (182) des Stators (172) oder an der Statoraufnahmefläche (184) anliegen und aufeinanderfolgende Fußbereiche (228) an der Statoraufnahmefläche (184) oder der Außenseite (182) des Stators (172) anliegen und/oder dass insbesondere die federelastischen Körper (202) zwischen um den Stator (172) umlaufend angeordneten Randbereichen (212, 214) liegen und die Abstützbereiche (222) über in einem spitzen Winkel zur Außenseite (182) des Stators (172) und/oder zur Statoraufnahmefläche (184) verlaufende Flankenbereiche (234, 236) mit den Randbereichen (212, 214) verbunden sind, dass insbesondere einerseits die Abstützbereiche (222) an der Außenseite (182) des Stators (172) oder der Statoraufnahmefläche (184) und andererseits die Randbereiche (212, 214) an der Statoraufnahmefläche (184) oder der Außenseite (182) des Stators (172) anliegen.

14. Kältemittelverdichter (10) nach einem der Ansprüche 8 bis 13, **dadurch gekennzeichnet, dass** die Tragelemente (192, 194) aus einem federelastischen Material, insbesondere Federstahl, gebildet sind.

15. Kältemittelverdichter (10) nach einem der Ansprüche 8 bis 14, **dadurch gekennzeichnet, dass** in Richtung der Rotorachse (178) aufeinanderfolgend angeordnete Tragelemente (192, 194) durch ein Distanzelement (244) im Abstand voneinander in dem Motorgehäuseabschnitt (22) positioniert sind.

16. Kältemittelverdichter (10) nach einem der Ansprüche 8 bis 15, **dadurch gekennzeichnet, dass** eines der Tragelemente (192) hinsichtlich seiner Position in dem Motorgehäuseabschnitt (22) durch eine sich an die Statoraufnahmefläche (184) anschließende Stufe (146) positioniert ist.

## Claims

1. A refrigerant compressor (10) comprising an overall housing (12) with a motor housing portion (22), in which there is arranged a motor chamber (98) having, provided therein, an electric motor (102) comprising a stator (172) and a rotor (174), and with a compressor housing portion (24) which has a compressor unit, wherein the overall housing (12) has a first cover (14) and a second cover (18), between which a housing sleeve (16) extends, which has the motor housing portion (22) and the compressor housing portion (24) in which a cylinder housing (52) is provided, wherein the cylinder housing (52) carries a cylinder head (56), wherein the housing sleeve (16) with the housing covers (14, 18) is made of a light metal, in particular of aluminium, **characterized in that** the cylinder head (56) is formed of a cylinder head lower part (62) molded with the cylinder housing (52), the lower part for its part also receiving the cylinder (54), **in that** the cylinder head lower part (62) molded with the housing sleeve (16) is made of a light metal, in particular of aluminium, **in that** the cylinder head lower part (62) carries a valve plate (64) which closes off the cylinder (54), upon which there is in turn arranged a cylinder head upper part (66) on a side opposite to the cylinder head lower part (62), **in that** the valve plate (64) and the cylinder head upper part (66) are formed of steel, and **in that** the housing sleeve (16) has an approximately cylindrical, in particular circular cylindrical, shape.

2. A refrigerant compressor (10) according to claim 1, **characterized in that** the refrigerant compressor is configured for CO₂ as refrigerant.

3. A refrigerant compressor (10) according to claim 1 or 2, **characterized in that** in one of the covers (14, 18) there is provided at least one contact insert (252, 262) for guiding electrical feeder lines into the overall housing (12).

4. A refrigerant compressor according to claim 3, **characterized in that** all electrical lines guided into the overall housing (12) are guided by at least one contact insert (252, 262) in at least one of the covers (14, 18) of the overall housing (12).

5. A refrigerant compressor (10) according to claim 4, **characterized in that** the electrical lines guided into the overall housing (12) are on the one hand power lines to the electric motor (102) and on the other hand lines to different sensors (272, 274, 276) arranged in the overall housing (12) for monitoring the electric motor (102) and/or the functioning of the refrigerant compressor (10).

6. A refrigerant compressor (10) according to one of the preceding claims, **characterized in that** the cylinder head lower part (62) carries the cylinder head upper part (66) with at least one outlet chamber (82) integrated therein, and **in that** refrigerant connections (94, 96, 106) guided into the overall housing (12) are arranged either in the cylinder head upper part (66) or in one of the covers (14, 18).

7. A refrigerant compressor (10) according to one of the preceding claims, **characterized in that** said compressor is a two-stage compressor, and **in that** an outlet chamber (78) for medium pressure and an outlet chamber (78) for high pressure are provided in the cylinder head upper part (66).

8. A refrigerant compressor (10) according to one of the preceding claims, **characterized in that** the stator (172) is mounted in the motor housing portion (98) by means of supporting elements (192, 194) inserted into the motor housing portion (98), which supporting elements on the one hand abut against a stator-receiving surface (184) of the motor housing portion (22) and on the other hand surround the stator (172) inserted into the supporting elements (192, 194) on its outer side (182) and supported spring-elastically relative to the stator-receiving surface (184).

9. A refrigerant compressor (10) according to claim 8, **characterized in that** the supporting elements (192, 194) have spring-elastic bodies (202) which are dimensioned such that they are in an elastically deformed state in all operating states of the motor housing portion (184) occurring during operation of the refrigerant compressor (10).

10. A refrigerant compressor (10) according to claim 8 or 9, **characterized in that** the supporting elements (192, 194) are arranged running around the stator (172) and support the stator (172) at a plurality of locations on opposite sides of the rotor axis (178) relative to the stator-receiving surface (184) of the motor housing portion (22).

11. A refrigerant compressor (10) according to one of claims 8 to 10, **characterized in that** the supporting elements (192, 194) have elastic bodies (202) arranged around the rotor axis (178) at defined angular intervals.

12. A refrigerant compressor (10) according to one of claims 8 to 11, **characterized in that** elastic bodies (202) are positioned relative to one another by a band material (208) positioning them relative to one another and running around the stator (172), **in that** in particular the elastic bodies (202) are formed into the band material (208), **in that** in particular the band material (208) is in the form of a ring-like clasp with open ends (210).

13. A refrigerant compressor (10) according to one claims 8 to 12, **characterized in that** the spring-elastic bodies (202) have flank regions (224, 226, 234, 236) running at an acute angle to the outer side (182) of the stator (172) and/or to the stator-receiving surface (184) between foot regions (228) and support regions (222), one of which abuts against the outer side (182) of the stator (172) and the other of which abuts against the stator-receiving surface (184) and/or **in that** in particular the spring-elastic bodies (202) are successively formed into a spring-elastic band material (208) such that successive support regions (222) abut against an outer side (182) of the stator (172) or against the stator-receiving surface (184) and successive foot regions (228) abut against the stator-receiving surface (184) or the outer side (182) of the stator (172) and/or **in that** in particular the spring-elastic bodies (202) are located between edge regions (212, 214) arranged peripherally around the stator (172), and the support regions (222) are connected to the edge regions (212, 214) by means of flank regions (234, 236) running at an acute angle to the outer side (182) of the stator (172) and/or to the stator-receiving surface (184), **in that** in particular, on the one hand, the support regions (222) abut against the outer side (182) of the stator (172) or the stator-receiving surface (184) and, on the other hand, the edge regions (212, 214) abut against the stator-receiving surface (184) or the outer side (182) of the stator (172).

14. A refrigerant compressor (10) according to one of claims 8 to 13, **characterized in that** the supporting elements (192, 194) are formed from a spring-elastic material, in particular spring steel.

15. A refrigerant compressor (10) according to one of claims 8 to 14, **characterized in that** supporting elements (192, 194) arranged successively in the direction of the rotor axis (178) are positioned spaced apart from one another in the motor housing portion (22) by a spacer element (244).

16. A refrigerant compressor (10) according to one of claims 8 to 15, **characterized in that** one of the supporting elements (192) is positioned in respect of its position in the motor housing portion (22) by a step (146) adjoining the stator-receiving surface (184).

## Revendications

1. Compresseur de réfrigérant (10) comprenant un boîtier général (12) pourvu d'un segment de carter moteur (22) dans lequel est disposé un compartiment moteur (98) ayant un moteur électrique (102) placé dans celui-ci, comprenant un stator (172) et un rotor (174), et un segment de carter de compresseur (24) qui présente une unité de compresseur, dans lequel le boîtier général (12) présente un premier couvercle (14) et un deuxième couvercle (18), entre lesquels s'étend une gaine de boîtier (16) qui présente le segment de carter moteur (22) et le segment de carter de compresseur (24), dans lequel le boîtier de cylindre (52) est prévu, dans lequel le boîtier de cylindre (52) supporte une tête de cylindre (56), dans lequel la gaine de boîtier (16) pourvue couvercles (14, 18) de boîtier est réalisée en métal léger, notamment en aluminium, **caractérisé en ce que** la tête de cylindre (56) est formée par une partie inférieure de tête de cylindre (62) formée sur le boîtier de cylindre (52) qui intègre de son côté encore un cylindre (54), **en ce que** la partie inférieure de tête de cylindre (62) formée sur la gaine de boîtier (16) est réalisée en métal léger, notamment en aluminium, **en ce que** la partie inférieure de tête de cylindre (62) supporte une plaque porte-soupape (64) enfermant les cylindres (54) sur laquelle de nouveau une partie supérieure de tête de cylindre (66) est disposée sur un côté opposé à la partie inférieure de tête de cylindre (62), **en ce que** la plaque porte-soupape (64) et la partie supérieure de tête de cylindre (66) sont réalisées en acier, et **en ce que** la gaine de boîtier (16) présente une forme approximativement cylindrique, notamment cylindrique circulaire.

2. Compresseur de réfrigérant (10) selon la revendication 1, **caractérisé en ce que** le compresseur de réfrigérant est conçu pour le CO₂ en tant que réfrigérant.

3. Compresseur de réfrigérant (10) selon la revendication 1 ou la revendication 2, **caractérisé en ce qu'**au moins un insert de contact (252, 262) est prévu pour le passage de conduites d'alimentation électriques dans le boîtier général (12) dans l'un des couvercles (14, 18).

4. Compresseur de réfrigérant (10) selon la revendication 3, **caractérisé en ce que** la totalité des conduites électriques amenées dans le boîtier général (12) sont amenées dans au moins l'un des couvercles (14, 18) du boîtier général (12) par le biais d'un au moins insert de contact (252, 262).

5. Compresseur de réfrigérant (10) selon la revendication 4, **caractérisé en ce que** les conduites électriques amenées dans le boîtier général (12) sont d'une part des conduites d'alimentation électriques jusqu'au moteur électrique (102) et d'autre part des conduites jusqu'à des capteurs (272, 274, 276) divers disposés dans le boîtier général (12) pour la surveillance du moteur électrique (102) et/ou de l'action du compresseur de réfrigérant (10).

6. Compresseur de réfrigérant (10) selon l'une des revendications précédentes, **caractérisé en ce que** la partie inférieure de tête de cylindre (62) supporte la partie supérieure de tête de cylindre (66) pourvue d'au moins une chambre de sortie (82) intégrée dans celle-ci, et **en ce que** des raccordements de liquide réfrigérant (94, 96, 106) amenés dans le boîtier général (12) sont disposés soit dans la partie supérieure de tête de cylindre (66) soit dans l'un des couvercles (14, 18).

7. Compresseur de réfrigérant (10) selon l'une des revendications précédentes, **caractérisé en ce que** celui-ci est un compresseur à deux étages et **en ce qu'**une chambre de sortie (78) pour une pression moyenne et une chambre de sortie (78) pour une haute pression sont prévues dans la partie supérieure de tête de cylindre (66).

8. Compresseur de réfrigérant (10) selon l'une des revendications précédentes, **caractérisé en ce que** le stator (172) est logé dans le segment de carter moteur (98) au moyen d'éléments de support (192, 194) mis en œuvre dans le segment de carter moteur (98), qui reposent d'une part sur une surface de réception de stator (184) du segment de carter moteur (22) et d'autre part comprennent le stator (172) mis en œuvre dans les éléments de support (192, 194) sur sa face externe (182) et qui le soutiennent de manière élastique par rapport à la surface de réception de stator (184).

9. Compresseur de réfrigérant (10) selon la revendication 8, **caractérisé en ce que** les éléments de support (192, 194) présentent des corps élastiques (202), qui sont dimensionnés de manière à être à l'état déformé élastiquement dans tous les états de fonctionnement du segment de carter moteur (184) survenant lors du fonctionnement du compresseur de réfrigérant (10).

10. Compresseur de réfrigérant (10) selon la revendication 8 ou la revendication 9, **caractérisé en ce que** les éléments de support (192, 194) sont disposés tout autour du stator (172) et soutiennent le stator (172) à plusieurs reprises respectivement sur les côtés opposés de l'axe de rotor (178) par rapport à la surface de réception de stator (184) du segment de carter de moteur (22).

11. Compresseur de réfrigérant (10) selon l'une des revendications 8 à 10, **caractérisé en ce que** les éléments de support (192, 194) présentent des corps élastiques (202) disposés autour de l'axe de rotor (178) à des intervalles angulaires définis.

12. Compresseur de réfrigérant (10) selon l'une des revendications 8 à 11, **caractérisé en ce que** les corps élastiques (202) sont positionnés relativement les uns aux autres par le biais d'un matériau en bande (208) entourant le stator (172) et les positionnant les uns par rapport aux autres, **en ce que** les corps élastiques (202) sont notamment formés dans le matériau en bande (208), **en ce que** le matériau en bande (208) est notamment conçu sous la forme d'une barrette annulaire ayant des extrémités ouvertes (210).

13. Compresseur de réfrigérant (10) selon l'une des revendications 8 à 12, **caractérisé en ce que** les corps élastiques (202) présentent des zones de flancs (224, 226, 234, 236) s'étendant à un angle aigu par rapport à la face externe (182) du stator (172) et/ou par rapport à la surface de réception de stator (184) entre les zones de pied (228) et les zones de soutien (222) dont les uns reposent sur la face externe (182) du stator (172) et les autres reposent sur la surface de réception de stator (184) et/ou **en ce que** notamment les corps élastiques (202) sont formés successivement dans un matériau en bande élastique (208), de sorte que des zones de soutien (222) successives reposent sur une face externe (182) du stator (172) ou sur la surface de réception de stator (184) et des zones de pied (228) successives reposent sur la surface de réception de stator (184) ou sur la face externe (182) du stator (172) et/ou **en ce que** notamment les corps élastiques (202) résident entre des zones périphériques (212, 214) disposées tout autour du stator (172) et les zones de soutien (222) sont reliées aux zones périphériques (212, 214) par le biais de zones de flancs (234, 236) s'étendant à un angle aigu par rapport à la face externe (182) du stator (172) et/ou par rapport à la surface de réception du stator (184), **en ce que** les zones de soutien (222) reposent notamment d'une part sur la face externe (182) du stator (172) ou la surface de réception de stator (184) et d'autre part les zones périphériques (212, 214) reposent sur la surface de réception du stator (184) ou sur la face externe (182) du stator (172).

14. Compresseur de réfrigérant (10) selon l'une des revendications 8 à 13, **caractérisé en ce que** les éléments de support (192, 194) sont formés à partir d'un matériau élastique, notamment un acier à ressort.

15. Compresseur de réfrigérant (10) selon l'une des revendications 8 à 14, **caractérisé en ce que** les éléments de support (192, 194) disposés successivement en direction de l'axe de rotor (178) sont positionnés à travers un élément de distanciation (244) à intervalle les uns des autres dans le segment de carter de moteur (22).

16. Compresseur de réfrigérant (10) selon l'une des revendications 8 à 15, **caractérisé en ce que** l'un des éléments de support (192) est placé en ce qui concerne sa position dans le segment de carter de moteur (22) par le biais d'un palier (146) adjacent à la surface de réception de stator (184).
